Europäisches Patentamt

European Patent Office

Office européen des brevets

(19)

(11) **EP 0 705 513 B1**

(12) **FASCICULE DE BREVET EUROPEEN**

(45) Date de publication et mention
de la délivrance du brevet:
**06.05.1999 Bulletin 1999/18**

(21) Numéro de dépôt: **94919721.4**

(22) Date de dépôt: **16.06.1994**

(51) Int Cl.⁶: **H04L 27/22**

(86) Numéro de dépôt international:
**PCT/FR94/00724**

(87) Numéro de publication internationale:
**WO 95/01034 (05.01.1995 Gazette 1995/02)**

(54) **PROCEDE ET DISPOSITIF DE DEMODULATION DE SIGNAL NUMERIQUE**

MPSK-DEMODULATOR

DIGITAL SIGNAL DEMODULATION METHOD AND DEVICE

(84) Etats contractants désignés:
**AT BE CH DE DK ES FR GB GR IE IT LI LU MC NL
PT SE**

(30) Priorité: **17.06.1993 FR 9307324**

(43) Date de publication de la demande:
**10.04.1996 Bulletin 1996/15**

(73) Titulaire: **THOMCAST
78700 Conflans-Sainte-Honorine (FR)**

(72) Inventeur: **ALARD, Michel
F-75014 Paris (FR)**

(74) Mandataire: **Loisel, Bertrand et al
Cabinet Plasseraud,
84, rue d'Amsterdam
75440 Paris Cédex 09 (FR)**

(56) Documents cités:
**EP-A- 0 353 779        EP-A- 0 355 587
US-A- 4 466 108        US-A- 5 036 296**

**Description**

La présente invention concerne un procédé et un dispositif de démodulation de signal à modulation de phase à M états d'une porteuse, M étant un nombre entier, généralement pair, et notamment à M = $2^m$ états (m étant un entier).

L'invention trouve une application particulièrement importante, bien que non-exclusive, dans les sytèmes de transmission numériques en modulation MDPQ ou MDP8 d'une porteuse hyperfréquence (c'est-à-dire ayant une fréquence d'au moins 3 GHz). On peut notamment citer, à titre d'application, la transmission simultanée de plusieurs programmes de télévision numérique sous forme d'un multiplex dans un canal de diffusion de satellite, dans la bande des 12 GHz.

Cependant, comme on le verra plus loin, l'invention s'applique à la démodulation de tout signal utilisant la modulation MDP d'une porteuse et trouve un intérêt chaque fois que l'on se trouve dans des conditions défavorables de récupération de cette dernière.

Les systèmes de transmission et de diffusion sur un canal de satellite utilisent souvent une modulation de type MDP (MDPQ ou MDP8 en particulier) avec un codage préalable de protection contre les erreurs qui augmente le débit requis. On utilise en particulier des codes de protection convolutifs ou des codes concaténés (associant un codage convolutif à un codage de Reed-Solomon) Qui éliminent quasi-complètement les erreurs même pour des rapports $Eb/N_0$ (Eb étant l'énergie transportée par bit et $N_0$ le niveau de bruit) aussi faibles que 2 à 4 dB. Le rendement des systèmes de codage fait correspondre ces valeurs à des rapports $Ec/N_0$ (Ec étant l'énergie par bit transmise après codage) voisins de 0 dB.

On rencontre le même problème lorsqu'on utilise des modes de codage en treillis qui permettent de conserver l'efficacité spectrale d'un système non-codé, en augmentant le nombre d'états de modulation.

Les systèmes de codage de protection contre les erreurs, qui augmentent le débit à transmettre à nombre de bits utiles donné, compliquent la récupération de la porteuse lors de la démodulation à la réception et bien souvent ce sont les performances de cette récupération de la porteuse qui limitent les performances globales du système.

L'invention concerne plus particulièrement les procédés de démodulation conforme au préambule de la revendication 1. Classiquement on récupère la porteuse, généralement transposée, de façon "aveugle", c'est-à-dire sans connaître les instants d'ouverture maximale du diagramme de l'oeil. La réduction de performances due à cette récupération en "aveugle" n'est pas fatale dans le cas où l'oscillateur local de transposition est suffisamment stable pour que la plage d'acquisition en fréquence requise pour la récupération certaine de la porteuse soit étroite. Ce cas est celui des décodeurs professionnels.

Il n'en est pas de même dans le cas de récepteurs grand public, où l'oscillateur local de transposition est susceptible de dériver de plusieurs MHz : la récupération de porteuse sur une plage aussi large devient alors délicate et peut se révéler impossible dans le cas d'un signal présentant un rapport $Ec/N_0$ faible, ce qui est fréquemment le cas des signaux à forte redondance de codage de protection contre les erreurs.

On pourrait penser que de meilleurs résultats sont obtenus en récupérant conjointement la porteuse et l'horloge à l'aide d'une boucle de récupération fortement non-linéaire et à rebouclage. Malheureusement les systèmes correspondants sont complexes et présentent des risques de divergence.

Parmi les procédés et appareils connus de démodulation cohérente, on peut citer celui décrit dans le brevet US 4 466 168. La synchronisation au niveau symbole, c'est à dire l'horloge, est déduite de salves précédentes au cours d'une même transmission, tandis que l'estimation de la phase de porteuse s'effectue à partir de la salve elle-même. Le document EP-A-0353779 décrit un circuit de détection de préambule effectuant en parallèle la récupération de porteuse et la récupération de phase d'horloge. Le document EP-A-0355587 décrit un procédé de détection d'horloge et de récupération de porteuse suivant lequel on échantillonne les données reçues, on estime l'erreur de phase sur l'horloge, à partir des échantillons en bande de base, on corrige la phase d'horloge, on estime l'erreur de phase sur la porteuse et on la corrige. Le document US-A-5036296 décrit un circuit à poursuite de fréquence comportant un circuit de récupération d'horloge permettant de commander l'échantillonnage. Le mode de fonctionnement de ce circuit n'est pas défini.

La présente invention propose d'effectuer la récupération d'horloge avant la récupération de porteuse, de façon à permettre un échantillonnage aux instants d'ouverture optimale du diagramme de l'oeil et utilise pour cela le fait que la correspondance entre la fréquence d'horloge locale et la fréquence d'horloge du signal reçu est généralement très précise, contrairement à la correspondance entre fréquence porteuse transposée et fréquence d'horloge locale du passage en bande de base. La raison en est que l'horloge locale, fonctionnant à fréquence fixe, peut être stabilisée par quartz et que la précision de l'horloge du signal est très peu affectée par la transmission, puisque la seule source de dégradation est l'effet Doppler. Au contraire l'oscillateur local de transposition de fréquence doit fonctionner à fréquence ajustable.

L'invention propose en conséquence un procédé conforme à la revendication 1 ou 4.

Il est avantageux de commander la fréquence de l'oscillateur local jusqu'à ce que l'erreur de fréquence sur le signal échantillonné et numérisé soit minimale.

Dans un premier mode de réalisation, le minimum d'interférence intersymbole (ISI) est obtenu par recherche du minimum d'une fonction de la valeur du signal qui est non-linéaire et qui s'annule pour au moins quatre points de la constellation des états de phase (quatre points dans le cas d'une modulation MDP 4).

Cette fonction peut notamment être de la forme $F[z(t).z^*(t-T_s)]$, le produit étant destiné à éliminer la phase inconnue et F étant une fonction ayant la propriété de présenter des minima, de préférence nuls, pour tous les points de la constellation. Par exemple la fonction F peut être le minimum de la distance entre un point reçu et l'ensemble des points de la constellation ; $z=x+jy$ représente la valeur du signal sur les voies I et Q, et $T_s$ est la période de symbole. Le produit prend périodiquement une valeur dont le module est égal au carré du module du signal et la phase prend une valeur de la forme $2k\pi/M$, k étant un entier, aux instants d'échantillonnage idéaux. On obtient ainsi une constellation fixe.

Un autre mode de réalisation (revendication 4) est utilisable chaque fois que l'excès de bande par rapport à la limite de Nyquist est suffisante ou que la décroissance en limite de bande (roll-off) est progressive.

L'invention propose également un dispositif de démodulation permettant de mettre en oeuvre le procédé ci-dessus défini, conforme à la revendication 5 ou 6.

L'invention sera mieux comprise à la lecture de la description qui suit de modes particuliers de réalisation donnés à titre d'exemples non-limitatifs. La description se réfère aux dessins qui l'accompagnent, dans lesquels :

- la figure 1 est un schéma de principe montrant la constitution d'ensemble d'un démodulateur permettant de mettre en oeuvre l'invention ;
- la figure 2 est un schéma synoptique d'un module de récupération d'horloge suivant l'invention utilisable dans le démodulateur de la figure 1, ainsi qu'une constitution possible de la partie amont effectuant la transposition de fréquence ;
- la figure 3 montre une disposition que peut prendre la constellation des points représentatifs des états de phase, dans le cas d'une modulation MDPQ, dite aussi MDP4 ;
- la figure 4 montre l'allure du diagramme de l'oeil d'un signal modulant MDPQ ;
- la figure 5 est un schéma destiné à montrer une allure possible de l'évolution de la variance du signal servant à la récupération d'horloge, en fonction du temps;
- la figure 6, similaire à la figure 1, montre un autre mode de réalisation;
- la figure 7 montre l'allure d'une fonction intervenant dans la recherche de la phase correcte d'horloge;
- la figure 8 est un schéma d'un mode possible de commande automatique de la fréquence d'un oscillateur de transposition, permettant de récupérer la fréquence porteuse aussi longtemps qu'elle rentre dans une plage d'accrochage ajustable; et
- la figure 9 montre l'allure d'une fonction intervenant dans la récupération de porteuse.

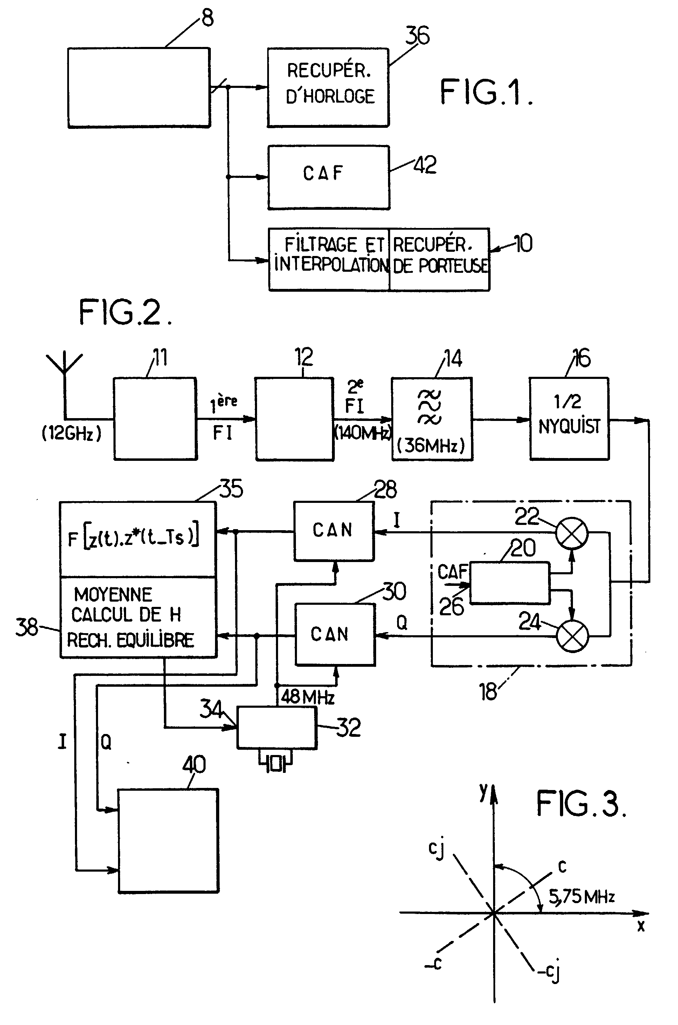

Le démodulateur dont la constitution de principe est montrée en figure 1 peut notamment être utilisé pour démoduler un signal diffusé par satellite, en modulation MDP. On peut le regarder comme constitué d'une tête de réception hyperfréquence et de transposition 8 qui alimente :

- un module de récupération d'horloge 36,
- un module de commande automatique de fréquence 42,
- des circuits 10 de récupération de porteuse, pouvant, dans certains cas, être précédés de moyens de filtrage complémentaires et d'interpolation.

Les divers composants ci-dessus seront maintenant décrits successivement, éventuellement avec plusieurs modes d'exécution possibles.

La tête 8 peut avoir la constitution relativement classique montrée en figure 2. Elle comporte alors une partie hyperfréquence, par exemple destinée à recevoir un signal dans la bande des 12 GHz. Ce signal traverse d'abord une partie hyperfréquence ayant deux circuits de transposition de fréquence en cascade 11 et 12, permettant de passer successivement à une première fréquence intermédiaire puis à une seconde fréquence intermédiaire qui est fixe, par exemple à 140 MHz. Dans le cas d'une tête haute fréquence grand public, par exemple prévue pour un système dit VSAT, la précision et la stabilité des oscillateurs locaux (non représentés sur la figure 1) ne permettent pas de maintenir la fréquence intermédiaire à mieux que quelques MHz.

Le signal transposé à la seconde fréquence intermédiaire est appliqué à un filtre 14 de sélection de canal, qui, dans le cas d'une émission depuis un satellite, a généralement une largeur de 36 MHz environ. Il sera surtout question par la suite de signaux dont la modulation numérique est à une cadence de 46 Mbits/s, correspondant à 23 MHz de fréquence symbole 1/Ts. Lorsque, ce qui est le cas le plus fréquent, l'émetteur est muni d'un filtre demi-Nyquist, le filtre à large bande est suivi d'un filtre demi-Nyquist 16 qui peut cependant être reporté dans la chaîne de traitement numérique en bande de base.

EP 0 705 513 B1

Le signal est ensuite appliqué à des moyens 18 de conversion en bande de base, comportant un oscillateur 20 dont la fréquence doit être aussi proche que possible de la fréquence du signal transposé (appelée ci-après fréquence de porteuse), fournissant deux ondes sinusoidales ayant un déphasage mutuel de 90°. Ces ondes sont appliquées à des multiplieurs respectifs 22 et 24 destinés à fournir deux signaux en quadrature I et Q. Dans le mode de réalisation avantageux illustré sur la figure 2. l'oscillateur local 20 de passage en bande de base est à fréquence commandable par un signal appliqué sur une entrée 26.

Sur chacune des voies I et Q est ensuite interposé un convertisseur analogique-numérique 28 ou 30, dont la fréquence d'échantillonnage est commandée par une horloge locale 32 à la fréquence de bit. Cette horloge 32, pouvant être stabilisée par quartz, reproduit généralement la fréquence de bit à $10^{-5}$ près, donc avec une précision très élevée. Par asservissement, l'erreur à long terme peut même être rendue nulle. L'horloge 32 présente dans ce cas une entrée 34 de réglage de la phase. Les valeurs c, cj, -c, -cj prises par le signal aux instants d'échantillonnage peuvent ne pas correspondre aux points nominaux (points sur les axes, comme indiqué sur la figure 3, pour une modulation MDP4). Sur cette figure 3, un quadrant correspond à une erreur de $1/4T_s$, c'est-à-dire 5,75 MHz pour une modulation MDP4 à 46 Mbits/s.

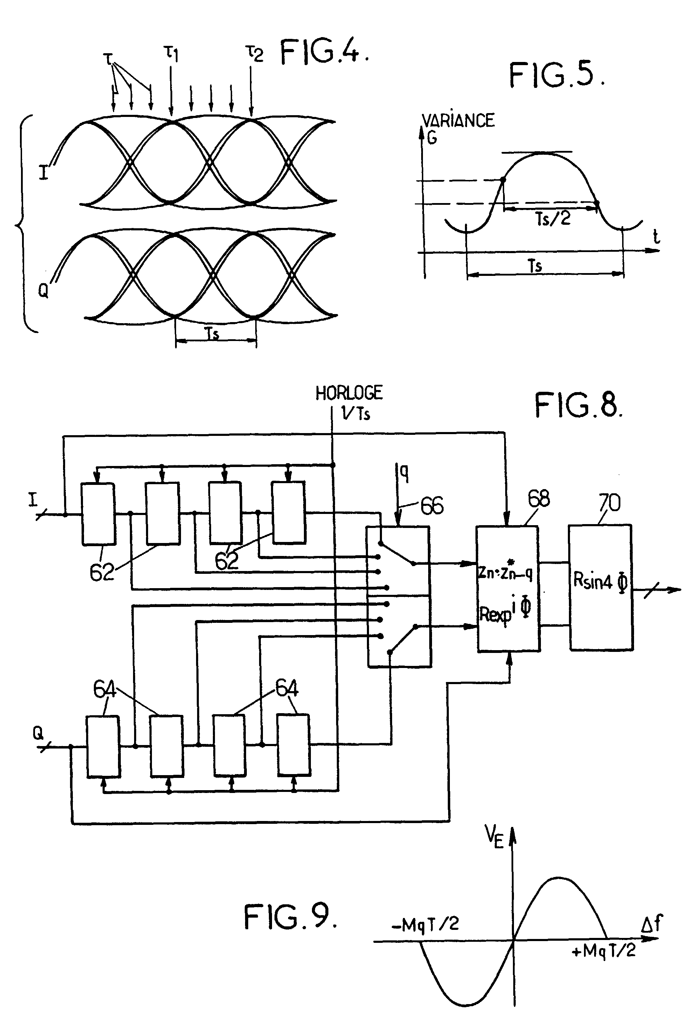

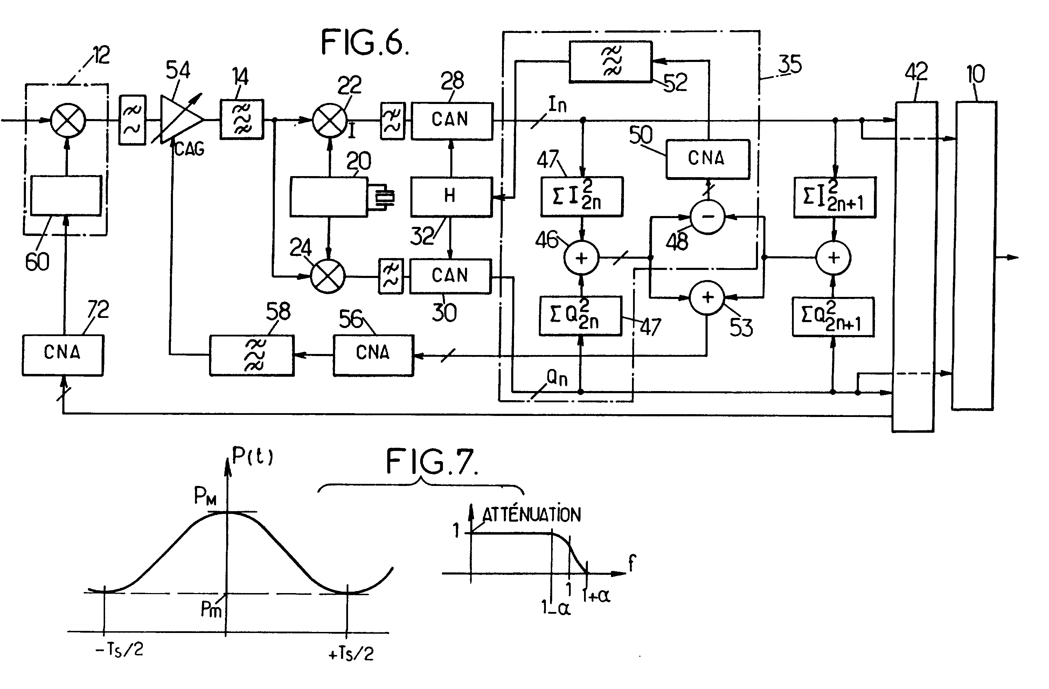

Si l'horloge a été exactement récupérée, les instants d'échantillonnage se placent en $\tau_1$, $\tau_2$,... à intervalles $T_s$ sur la figure 4 et le traitement ultérieur fait appel à des points supplémentaires $\tau$, obtenus par sur-échantillonnage à fréquence $4f_s$, pour arriver à une période d'échantillonnage $T_s/4$.

Conformément à un aspect de l'invention, les signaux I et Q échantillonnés sont appliqués directement à des moyens 35 de récupération d'horloge et de commande de la phase de l'horloge d'échantillonnage 32, permettant d'ajuster les instants d'échantillonnage de façon qu'ils soient placés de façon optimale par rapport au diagramme de l'oeil.

Dans le mode de réalisation montrée en figure 2, l'invention utilise les propriétés de la fonction z (t). z* $(t-T_s)$ où z (t) = x (t) + jy (t) représente la valeur du signal sur les voies I et Q. Cette fonction prend périodiquement les valeurs a, aj, -a et -aj, où a est le carré du module commun de c, -c, cj et -cj. Le produit complexe peut être représenté sur la figure 3 par des points qui conservent une position angulaire fixe par rapport à un axe, cette position étant représentative de l'erreur de fréquence et pouvant être utilisée pour une commande automatique de fréquence.

La démodulation différentielle éliminant la phase, qui est inconnue, on peut utiliser cette propriété pour identifier la phase optimale d'échantillonnage, qui correspond à la dispersion minimale.

Pour cela on peut faire appel à une fonction non-linéaire F(z) qui s'annule pour les quatre points de la constellation MDP4 (ou plus généralement pour tous les points de la constellation, pour des modulations autres que MDP4). Cette fonction peut être par exemple le minimum des carrés des distances euclidiennes à l'un des quatre points de la constellation, dans le cas du MDP4. Pour utiliser cette approche, on peut adopter la suite aléatoire $X_n(t)$ définie par:

$$X_n(t) = F[z(t+nTs).z^*(t+(n-1)Ts)]$$

où l'étoile * identifie la conjuguée complexe.

La valeur moyenne de cette suite pour chaque valeur de t est une fonction périodique G(t) qui a l'allure montrée sur la figure 5. Les minima de cette fonction de variance (représentative de la dispersion) correspondent aux instants optimaux d'échantillonnage. Mais ils ne sont nuls que si le diagramme de l'oeil est parfait. Une méthode simple pour rechercher les minima, valable dans tous les cas, consiste à exploiter la symétrie de la fonction G(t). On peut pour cela utiliser la fonction H(t) définie par :

$$H(t) = G(t+Ts/4) - G(t-Ts/4)$$

Cette fonction s'annule pour la phase optimale et est maximale pour $t = + T_s/4$ et $t = - T_s/4$.

Cette approche peut être implémentée avec un premier module matériel ou logiciel de calcul 35 (figure 2) qui calcule $F[z(t). z^*(t-T_s)]$, et un second module 38 qui calcule H pour les valeurs successives de t, par différence entre les variances pour deux points écartés de $T_s/2$, effectue une moyenne et commande l'horloge 32 pour annuler H et arriver à l'équilibre des deux points montrés en figure 5.

Le schéma représenté comporte ensuite le module 10 qui reçoit lui aussi les échantillons numérisés $I(f_s)$ et $Q(f_s)$ à la fréquence symbole ; ils sont traités de façon classique dans un module 40 de récupération de porteuse, portant par exemple le signal à la puissance 4 (ou utilisant une boucle de Costas) et de démodulation cohérente ou différentielle, non représenté. Un filtrage peut être effectué en amont du circuit de récupération. Au surplus, une interpolation est nécessaire lorsque l'échantillonnage s'effectue à la période $T_s$ (figure 4).

Un module 42 de commande automatique de la fréquence de l'oscillateur local 20 et d'adaptation à la fréquence de porteuse (figure 1) est généralement prévu. Une constitution simple possible de ce module sera donnée

4

plus loin.

La figure 6, similaire à la figure 2, montre un autre mode de réalisation, plus simple que le précédent et en général plus avantageux; dans le cas de la figure 6 la récupération d'horloge est fondée sur des considérations énergétiques.

Une analyse théorique justifie la validité de l'approche utilisée. Elle utilise une fonction P(t) qui représente la répartition de l'énergie selon la phase d'échantillonnage modulo $T_s$ :

$$P(t) = E(|s(t)|^2),$$

E(.) étant l'espérance mathématique.

Le calcul montre que P(t) est une fonction périodique, de période $T_s$, dont l'expression est légèrement différente suivant le mode de filtrage.

Dans le cas d'un signal filtré demi-Nyquist provenant directement de l'émetteur avec un facteur de décroissance ou de "roll-off" $\alpha$, on a :

$$P(t) = 1 + (2\alpha/\pi) \, \text{Cos} \, 2\pi \, t/T_s$$

Dans le cas d'un signal filtré Nyquist avec un "roll-off" $\alpha$, on a :

$$P(t) = 1 - (\alpha/4) + \alpha/4 \, \text{Cos} \, 2\pi t/T_s$$

Dans tous les cas, la fonction P(t) a l'allure montrée en figure 7, avec un maximum $P_M$ et un minimum $P_m$ écartés de $T_s/2$. Le rapport $p = P_M/P_m$ dépend de la décroissance $\alpha$ et de la fonction de filtrage (demi-Nyquist ou Nyquist). Les valeurs suivantes peuvent être considérés comme représentatives, $\alpha$ étant défini comme indiqué à droite de la figure 7 et la limite 1 correspondant à une borne de la bande de Nyquist.

|  | $\alpha = 0,3$ | $\alpha = 0,5$ | $\alpha = 1$ |
|---|---|---|---|
| demi-Nyquist | 1,4721 | 1,9339 | 4,5039 |
| Nyquist | 1,1765 | 1,3333 | 2 |

Même pour des facteurs de décroissance $\alpha$ faibles, correspondant à un filtre de canal 14 à coupure franche, les variations de P(t) sont significatives, surtout dans le cas du filtrage demi-Nyquist. On aura donc intérêt à utiliser le signal reçu après filtrage de canal, mais avant filtrage demi-Nyquist de réception, dans le cas habituel où le filtrage Nyquist complet est partagé entre émetteur et récepteur. Le fait que le bruit soit alors élargi avant prise en compte du signal dans le calcul de P(t) n'est qu'un inconvénient mineur, car le rapport entre les bandes de bruit du filtre de canal et du filtre demi-Nyquist de réception (filtres 14 et 16 sur la figure 2) est de $(1 + \alpha)$. Le bruit affectant le signal ajoute donc seulement, à la fonction P(t) une composante continue légèrement plus élevée en cas d'utilisation du signal avant filtrage demi-Nyquist de réception.

Un avantage supplémentaire de l'utilisation du signal prélevé en amont du filtre demi-Nyquist de réception est qu'une erreur de fréquence affectant le signal reçu ne modifie en rien la fonction P(t), aussi longtemps que le signal reçu n'est pas sensiblement affecté par le décentrage dans le filtre de canal 14. En effet, aussi longtemps que le signal reste dans la bande passante du filtre de canal, le décentrage ne se traduit que par une multiplication par un exposant complexe. Comme dans le cas précédent les instants d'échantillonnage optimal correspondent aux minima de P(t).

Pour déterminer les minima, on peut encore utiliser la différence de deux valeurs pour des instants écartés de $T_s/2$, ici la fonction H :

$$H(t) = P(t-T_s/4) - P(t+T_s/4)$$

Cette fonction est symétrique par rapport à l'origine, s'annule pour $T_s/2$ et $- T_s/2$ et présente des maxima à $T_s/4$ et $- T_s/4$ par rapport à la phase d'horloge correcte.

Le second membre de la fonction H(t) peut être estimé par deux calculs de puissance moyenne, effectués l'un sur quelques échantillons pairs successifs à la fréquence symbole $1/T_s$, l'autre sur le même nombre d'échantillons impairs et par soustraction.

Les calculs de puissance P sont à effectuer aux phases nominales $- T_s/4$ et $+ T_s/4$. Ils permettent d'obtenir $P_{2n} = I^2_{2n} + Q^2_{2n}$ et $P_{2n-1}$.

Le passage à zéro de $P_{2n} - P_{2n-1}$, représentatif de H(t), constitue un critère d'asservissement de la phase de l'horloge 32.

Le mode de réalisation illustré sur la figure 6 (où certains filtres passe-bas sont omis pour plus de clarté) correspond à un signal MDP4 (ou QPSK) dans la bande normalisée satellite, utilisant le signal avant filtrage demi-Nyquist pour récupérer l'horloge.

Les signaux analogiques de sortie des multiplieurs 22 et 24 sont appliqués aux convertisseurs analogique/ numérique 28 et 30. Dans le cas d'une transmission sur un canal satellite, le filtre de canal 14 a une bande de 36 MHz et tolère généralement un facteur de décroissance $\alpha$ d'environ 0,5. L'oscillateur 20 est à fréquence fixe, le dispositif de la figure 6 comportant une commande automatique de maintien de la seconde fréquence intermédiaire, qui sera décrite plus loin. La phase de l'horloge locale 32, dont la fréquence nominale est de 48 MHz, est commandée par la boucle de récupération d'horloge.

La boucle de récupération d'horloge utilise les séquences d'échantillons Is et Qs qui apparaîssent, à la sortie des convertisseurs 28 et 30, au rythme de deux fois la fréquence symbole 1/Ts, c'est à dire à la fréquence bit.

On calcule alors séparément la puissance instantanée à la cadence d'apparition des échantillons et on calcule la puissance moyenne, d'une part pour les échantillons pairs, d'autre part pour les échantillons impairs. Sur la figure 6, la branche de calcul pour les échantillons pairs $I_{2n}$, comporte deux éléments d'élévation au carré 47 (pouvant en général accumuler quelques échantillons) et un additionneur 46. La branche de calcul pour les échantillons impairs est similaire. Un soustracteur 48 permet alors d'obtenir un signal de sortie représentatif en permanence de la fonction H ci-dessus. Ce signal numérique est utilisé pour commander l'horloge 32, à l'aide d'un convertisseur numérique-analogique 50 et d'un filtre passe-bas de boucle 52 effectuant une moyenne sur quelques centaines d'échantillons.

Lorsque les échantillons $I_n$ et $Q_n$ sont numérisés sur 8 bits, il suffit généralement de soustracteurs sur 12 bits, en effectuant une moyenne sur un nombre d'échantillons faible (quatre par exemple), mais suffisant pour réduire la vitesse requise du CNA 50. Dans la pratique d'ailleurs, l'accumulation du carré des échantillons peut être effectuée par un filtre passe-bas.

On voit que le schéma de la figure 6 commande l'horloge 32 jusqu'à amener à la fonction H. Les composantes continues qui apparaissent dans les signaux sont automatiquement éliminées dans le traitement.

Les échantillons numérisés $I_n$ et $Q_n$ sont également appliqués au module 42 de commande automatique de fréquence dont une constitution possible est donnée en figure 8 et au module 10. Ce dernier effectue le filtrage demi-Nyquist de réception et une interpolation ; cette interpolation, nécessaire pour disposer des échantillons à tous les instants d'échantillonnage $\tau$, peut être combinée au filtrage demi-Nyquist dans un filtre transverse unique. Les échantillons d'origine et ceux obtenus par interpolation sont utilisés pour la récupération de porteuse et la restitution des données, par exemple par démodulation différentielle.

Il est avantageux d'utiliser le signal de puissance pour effectuer une commande automatique de gain. Dans le cas représenté sur la figure 6, les puissances des échantillons pairs et impairs déjà disponibles sont additionnées en 53 et utilisées pour commander le gain d'un amplificateur 54 avant transposition de fréquence, par l'intermédiaire d'un convertisseur numérique-analogique 56 et d'un filtre passe-bas de boucle 58.

On décrira maintenant une boucle de commande automatique de la fréquence de l'oscillateur de transposition du circuit 12 destinée à un signal à modulation MDP à M états.

A l'entrée du bloc 42, on dispose d'une séquence d'échantillons complexes $z_n$ à la fréquence symbole $1/T_s$, qu'on peut écrire :

$$z_n = c_n \, A \exp (i\phi),$$

où

A et $\phi$ représentent l'amplitude et la phase à un instant t,

$c_n$ représente la valeur du symbole transmis, qui est : 1 ou $- 1$ en MDP 2; 1, i, -1 ou -i en MDP4.

A l'entrée du bloc 42, la porteuse n'est pas encore récupérée et $\phi$ est donc inconnu.

De plus le signal peut être affecté d'une erreur $\Delta f$ sur la fréquence transposée, par suite de la dérive de l'oscillateur 60 (fig. 6). Il est donc souhaitable de corriger $\Delta f$, qui est relié à la phase $\phi$ et à la phase idéale $\phi$o par :

$$\phi = \phi o + \Delta f. \, T_s$$

La boucle de contrôle de fréquence montrée en figure 8 utilise, pour estimer l'écart de fréquence $\Delta f$, un discriminateur à ligne à retard permettant de donner un retard quelconque de q temps symbole $T_s$ parmi plusieurs retards successifs. On peut ainsi déterminer une grandeur $s_n$ :

$$S_n = z_n. \, z^*_{n-q}$$

$$= A^2 \, c_n \, c_{n-q} \, \exp (2i\pi q \, \Delta f \, T_s)$$

Dans ce cas, d'une modulation MDP à M états, les symboles sont de la forme $\exp (2i\pi \, m/M)$.

Dans le cas $c_n. \, c_{n-q}$ prend uniquement des valeurs de la forme $\exp (2i\pi \, m/M)$ et le problème se ramène à une estimation d'erreur de phase, que l'on sait effectuer.

Aussi, grâce à une démodulation différentielle dans le bloc 57, on peut transformer l'estimation d'erreur de fréquence en une estimation d'erreur de phase.

Il existe de nombreuses implémentations permettant de remplir cette fonction, telles que la boucle de Costas et ses variantes.

On cherchera dans tous les cas à obtenir une caractéristique de la forme

$$V_e = K.\sin M\Delta\phi$$

où $\Delta\phi = 2\pi q\Delta fT$, $V_e$ est le signal de sortie et K est une constante.

Le signal d'erreur $V_e$ est périodique et, sa période est définie par la relation $Mq \, \Delta f \, T = 1$

La loi de variation du signal de sortie en fonction de l'erreur de phase $\Delta f$ est alors du genre montrée en figure 9 et fait apparaître que la boucle ne peut s'accrocher au delà de la bande $-\pi/MqT$ $+\pi/MqT_s$. Elle peut être ajustée de façon à être adaptée à la stabilité de l'oscillateur 60 par un choix approprié du nombre de retards $q.T_s$ possibles.

Par exemple pour une modulation MDP4 à 40 Mbit/s, la plage d'accrochage pour q=1 (un seul retard possible) est de $\pm 2,5$ MHz. La largeur de cette plage est inversement proportionnelle à q mais la sensibilité et la précision sur la fréquence augmentent proportionnellement à q.

Dans le mode de réalisation illustré sur la figure 8, destiné à un signal MDP4, q peut varier de 1 à 4. Les signaux $I_n$ et $Q_n$ sont adressés sur des lignes à retard respectives à quatre éléments 62 et 64, pouvant être constituées par des registres à décalage commandés à la fréquence symbole $1/T_s$. Le nombre q de temps symbole dont le signal est retardé est sélectionné à l'aide d'une entrée 66.

Un module de calcul 68, logiciel ou matériel, calcule $z_n.z^*_{n-q}$, qui s'écrit sous forme du produit d'une constante R par $i\phi$. Ce produit est utilisé par un second module 70 pour estimer $\phi$, c'est-à-dire l'angle polaire de $z_n. \, z^*_{n-q}$, et en déduire $R \sin 4 \, \phi$ (dans le cas d'une modulation MDP4).

Ce calcul peut être fait de façon grossière et se limiter au choix de la valeur la plus proche dans une table. Le résultat, obtenu par exemple avec le même nombre de bits que I et Q, est utilisé après conversion numérique-analogique 72 pour commander un filtre de bande de commande de la fréquence de l'oscillateur 60.

## Revendications

1.   Procédé de démodulation de signal à modulation de phases à M états d'une porteuse, M étant un nombre entier, suivant lequel on convertit le signal en bande de base sur deux voies en quadrature par multiplication par un signal d'oscillateur local (20) à la fréquence de porteuse et on numérise le signal en bande de base par échantillonnage à la fréquence d'horloge du signal modulant,
   caractérisé en ce que, avant récupération de porteuse, on récupère l'horloge du signal par calage de la phase d'une horloge locale (34) stabilisée à la fréquence de bit par recherche du minimum d'une fonction F de la valeur du signal qui est non-linéaire et qui s'annule pour les M points de la constellation des états de phase afin d'obtenir un minimum d'interférence intersymbole.

2.   Procédé selon la revendication 1, caractérisé en ce que ladite fonction est de la forme $F[z(t).z^*(t-T_s)]$ où $z=x+jy$

représente la valeur du signal sur les voies I et Q et $T_s$ est la période de symbole.

3.  Procédé selon la revendication 2, caractérisé en ce qu'on obtient le minimum par détermination de l'annulation de la fonction $H(t)=G(t+T_s/4)-G(t-T_s/4)$, où G représente la moyenne de $F[z(t).z^*(t-T_s)]$.

4.  Procédé de démodulation de signal à modulation de phases à M états d'une porteuse, M étant un nombre entier, suivant lequel on convertit le signal en bande de base sur deux voies en quadrature par multiplication par un signal d'oscillateur local (20) à la fréquence de porteuse et on numérise le signal en bande de base par échantillonnage à la fréquence d'horloge du signal modulant,

    caractérisé en ce que, avant récupération de porteuse, on récupère l'horloge du signal par calage de la phase d'une horloge locale (34) stabilisée à la fréquence de bit en recherchant un minimum d'interférence intersymbole par échantillonnage du signal avant conversion en bande de base, mesure de la variation de l'énergie moyenne du signal en fonction de la phase d'échantillonnage, et sélection de la phase pour laquelle l'énergie est maximale.

5.  Dispositif de démodulation de signal à modulation de phases à M états d'une porteuse, comprenant : des moyens à au moins un oscillateur local (60) de transposition du signal reçu à une fréquence intermédiaire ; des moyens de conversion en bande de base sur deux voies (IQ) en quadrature, utilisant un oscillateur local (20) à fréquence ajustable autour d'une valeur nominale ; des moyens (28-32) d'échantillonnage et de conversion numérique des deux voies comportant une horloge (32) à phase ajustable, stabilisée à la fréquence de bit du signal entrant ; et des moyens (38,40;56,57) de récupération de porteuse et de démodulation cohérente des deux voies,

    caractérisé par des moyens (36) pour ajuster la phase de l'horloge (32) à la valeur correspondant au minimum d'interférence intersymbole et des moyens pour commander l'oscillateur local (60), l'ajustage de la phase d'horloge s'effectuant par analyse du signal avant récupération de porteuse ; les dits moyens pour ajuster la phase d'horloge comprenant des moyens pour calculer une fonction non linéaire $F[z(t).z^*(t-T_s)]$ où $z = x + jy$ représente la valeur du signal sur les voies I et Q et $T_s$ est la période de symbole, et des moyens pour commander la fréquence de l'horloge jusqu'à annuler la dite fonction.

6.  Dispositif de démodulation de signal à modulation de phases à M états d'une porteuse, comprenant : des moyens à au moins un oscillateur local (60) de transposition du signal reçu à une fréquence intermédiaire ; des moyens de conversion en bande de base sur deux voies (IQ) en quadrature, utilisant un oscillateur local (20) à fréquence ajustable autour d'une valeur nominale ; des moyens (28-32) d'échantillonnage et de conversion numérique des deux voies comportant une horloge (32) à phase ajustable, stabilisée à la fréquence de bit du signal entrant ; et des moyens (38,40;56,57) de récupération de porteuse et de démodulation cohérente des deux voies,

    caractérisé par des moyens (36) pour ajuster la phase de l'horloge (32) à la valeur correspondant au minimum d'interférence intersymbole et des moyens pour commander l'oscillateur local (60), l'ajustage de la phase d'horloge s'effectuant par analyse du signal avant récupération de porteuse ; les dits moyens étant constitués pour calculer la répartition de l'énergie en fonction de la phase de l'horloge d'échantillonnage et pour commander la fréquence d'horloge jusqu'à obtention d'un maximum.

7.  Dispositif selon la revendication 6, caractérisé en ce que les dits moyens effectuent une recherche de maximum de la fonction de distribution d'énergie P par estimation de deux puissances moyennes, l'une sur des échantillons pairs successifs à la fréquences symbole $1/T_s$, l'autre sur le même nombre d'échantillons impairs, soustraction des deux puissances estimées et commande de l'horloge d'échantillonnage à partir du résultat de la soustraction.

8.  Dispositif selon la revendication 6, destiné à un signal MDP4, caractérisé en ce que les dits moyens sont montés pour recevoir des séquences d'échantillons numériques (Is, Qs) au rythme de deux fois la fréquence symbole 1/Ts et comportent :

    -   une branche de calcul de la puissance moyenne pour les échantillons pairs et une autre branche pour les échantillons impairs, ayant chacune deux éléments d'élévation au carré affectés aux voies I et Q, accumulant plusieurs échantillons successifs, et un additionneur (46), et
    -   un soustracteur (48) formant un signal de sortie représentatif en permanence de la différence, et des moyens de conversion numérique-analogique et de filtrage passe-bas.

9.  Dispositif selon la revendication 8, caractérisé en ce qu'il comprend de plus des moyens de commande automatique de gain d'un amplificateur d'entrée (54), comprenant un additionneur (52) des sorties des additionneurs (46) et un convertisseur numérique-analogique attaquant l'entrée de commande de gain de l'amplificateur.

**EP 0 705 513 B1**

**Patentansprüche**

1. Verfahren zur Demodulation von phasenmodulierten Signalen mit M Zuständen einer Trägerwelle, wobei M eine ganze Zahl ist, bei welchem das Signal durch Multiplikation mit einem Signal des Lokaloszillators (20) mit der Trägerfrequenz in das Grundband auf zwei um 90° phasenverschobenen Kanälen umgewandelt wird und das Signal im Grundband durch Abtastung mit der Taktfrequenz des Moduliersignals digitalisiert wird,
**dadurch gekennzeichnet**, daß vor Rückgewinnung der Trägerwelle der Signaltakt durch Verschiebung der Phase eines lokalen Taktgebers (34) rückgewonnen wird, der durch Suche nach dem Minimum einer Funktion F des Wertes des nicht-linearen Signals auf die Bitfrquenz stabilisiert ist und für die M Punkte der Konstellation der Phasenzustände aufgehoben wird, um eine kleinstmögliche Störung zwischen den Zeichen zu erreichen.

2. Verfahren nach Anspruch 1, dadurch gekennzeichnet, daß die Funktion die Form $F[z(t)\ z^*(t-T_s)]$ aufweist, bei welcher $z = x + jy$ den Wert des Signals auf den Kanälen I und Q repräsentiert und $T_s$ die Periode des Zeichens ist.

3. Verfahren nach Anspruch 2, dadurch gekennzeichnet, daß man den kleinstmöglichen Wert durch Bestimmung der Aufhebung der Funkton $H(t) = G(t+ T_s/4)-G(t-T_s/4)$ erhält, wobei G den Mittelwert von $F[z(t)\ z^*(t-T_s)]$ darstellt.

4. Verfahren zur Demodulation von phasenmodulierten Signalen mit M Zuständen einer Trägerwelle, wobei M eine ganze Zahl ist, bei welchem das Signal durch Multiplikation mit einem Signal des Lokaloszillators (20) mit der Trägerfrequenz in das Grundband auf zwei um 90° phasenverschobenen Kanälen umgewandelt wird und das Signal im Grundband durch Abtastung mit der Taktfrequenz des Moduliersignals digitalisiert wird,
**dadurch gekennzeichnet,** daß vor Rückgewinnung der Trägerwelle der Signaltakt durch Verschiebung der Phase eines lokalen Taktgebers (34) rückgewonnen wird, der unter Suche nach dem Minimum der Störung zwischen den Zeichen durch Abtasten des Signals vor Umwandlung in das Grundband stabilisiert ist, daß die Veränderung der mittleren Energie des Signals in Abhängigkeit von der Abtastphase gemessen und die Phase gewählt wird, bei welcher die Energie am höchsten ist.

5. Vorrichtung zur Demodulation von phasenmodulierten Signalen mit M Zuständen einer Trägerwelle, welche folgendes aufweist: eine Einrichtung mit mindestens einem Lokaloszillator (60) zum Umsetzen des mit einer Zwischenfrequenz empfangenen Signals; eine Einrichtung zur Umwandlung in das Grundband auf zwei um 90° phasenverschobenen Kanäle (IQ) unter Verwendung eines Lokaloszillators (20) mit einer Frequenz, die um einen Sollwert herum einstellbar ist; eine Einrichtung (28-32) zur Abtastung und Digitalisierung der beiden Kanäle mit einem Taktgeber (32) mit einstellbarer Phase, welcher auf die Bitfrequenz des einlaufenden Signals stabilisiert ist; und eine Einrichtung (38, 40; 56, 57) zur Rückgewinnung der Trägerwelle und zur kohärenten Demodulation der beiden Kanäle,
gekennzeichnet durch eine Einrichtung (36) zum Einstellen der Phase des Taktgebers (32) auf den Wert, welcher dem kleinstmöglichen Wert der Störung zwischen den Zeichen entspricht, und eine Einrichtung zum Ansteuern des Lokaloszillators (60), wobei die Phaseneinstellung des Taktgebers durch Analyse des Signals vor Rückgewinnung der Trägerwelle erfolgt; bei welcher die Einrichtung zur Einstellung der Phase des Taktgebers eine Einrichtung zum Berechnen einer nicht-linearen Funktion $F[z(t)\ z^*(t-T_s)]$ ist, bei welcher $z = x + jy$ den Wert des Signals auf den Kanälen I und Q repräsentiert und $T_s$ die Periode des Zeichens ist, sowie eine Einrichtung zum Steuern der Taktfrequenz bis zur Aufhebung der Funktion.

6. Vorrichtung zur Demodulation von phasenmodulierten Signalen mit M Zuständen einer Trägerwelle, welche folgendes aufweist: eine Einrichtung mit mindestens einem Lokaloszillator (60) zum Umsetzen des mit einer Zwischenfrequenz empfangenen Signals; eine Einrichtung zur Umwandlung in das Grundband auf zwei um 90° phasenverschobenen Kanälen (IQ) unter Verwendung eines Lokaloszillators (20) mit einer Frequenz, die um einen Sollwert herum einstellbar ist; eine Einrichtung (28-32) zur Abtastung und Digitalisierung der beiden Kanäle mit einem Taktgeber (32) mit einstellbarer Phase, welcher auf die Bitfrequenz des einlaufenden Signals stabilisiert ist; und eine Einrichtung (38, 40; 56, 57) zur Rückgewinnung der Trägerwelle und zur kohärenten Demodulation der beiden Kanäle,
gekennzeichnet durch eine Einrichtung (36) zum Einstellen der Phase des Taktgebers (32) auf den Wert, welcher dem kleinstmöglichen Wert der Störung zwischen den Zeichen entspricht, und eine Einrichtung zum Ansteuern des Lokaloszillators (60), wobei die Phaseneinstellung des Taktgebers durch Analyse des Signals vor Rückgewinnung der Trägerwelle erfolgt, und wobei die Einrichtung zur Berechnung der Energieverteilung in Abhängigkeit von der Phase des Abtasttaktes und zum Steuern der Taktfrequenz bis zur Erzielung eines Maximums ausgelegt ist.

**7.** Vorrichtung nach Anspruch 6, dadurch gekennzeichnet, daß die Einrichtung eine Suche nach dem größtmöglichen Wert der Funktion der Energieverteilung P durch Hochrechnen der beiden mittleren Leistungen ausführt, und zwar die eine bei aufeinanderfolgenden geradzahligen Abtastwerten mit der Zeichenfrequenz $1/T_s$ und die andere bei derselben Anzahl ungeradzahliger Abtastwerte, sowie eine Subtraktion der beiden hochgerechneten Leistungen und Ansteuerung des Abtasttaktes ausgehend vom Ergebnis der Subtraktion.

**8.** Vorrichtung nach Anspruch 6, welche für ein MDP4-Signal bestimmt ist, dadurch gekennzeichnet, daß die Einrichtungen so angeordnet sind, daß sie mit einem Takt, der dem Doppelten der Zeichenfrequenz $1/T_s$ entspricht, Folgen digitaler Abtastwerte (Is, Qs) empfangen und folgendes umfassen:

- einen Abschnitt zur Berechnung der mittleren Leistung für die geradzahligen Abtastwerte und einen anderen Abschnitt für die ungeradzahligen Abtastwerte, wobei jeder Abschnitt jeweils zwei Elemente zur Quadratbildung aufweist, welche den Kanälen I und Q zugeordnet sind, und wobei mehrere aufeinanderfolgende Abtastwerte aufaddiert werden, sowie einen Addierer (46), und
- einen Subtrahierer (48), welcher ein Ausgangssignal bildet, das laufend fr die Differenz repräsentativ ist, und eine Einrichtung zur D/A-Umwandlung und Tiefpaßfilterung.

**9.** Vorrichtung nach Anspruch 8, dadurch gekennzeichnet, daß sie des weiteren eine Einrichtung zur automatischen Steuerung des Verstärkungsfaktors eines Eingangsverstärkers (54) aufweist, der einen Addierer (52) zum Addieren der Ausgangswerte der Addierer (46) um einen D/A-Umwandler als Treiber für den Eingang zur Steuerung des Verstärkungsfaktors des Verstärkers umfaßt.

## Claims

**1.** A method of demodulating a signal in which a carrier is phase modulated with M states, where M is an integer, in which the signal is converted to baseband on two paths in quadrate by multiplication by a local oscillator signal (20) at the carrier frequency, and the baseband signal is digitized by sampling at the clock frequency of the modulating signal,

characterized in that, prior to carrier recovery, the signal clock is recovered by setting the phase of a local clock (34) stabilized at the bit frequency by seeking the minimum of a function F of the value of the signal, which function is non-linear and becomes zero for the M points of the phase state constellation, in order to obtain a minimum of intersymbol interference.

**2.** A method according to claim 1, characterized in that said function is of the form F $[z(t).z*(t-T_s]$ where $z = x + jy$ represents the value of the signal on the I and Q paths, and $T_s$ is the symbol period.

**3.** A method according to claim 2, characterized in that the minimum is obtained by determining where the function $H(t) = G(t+T_s/4) - G(t-T_s/4)$ becomes zero, in which G represents the means value of $F[z(t).z*(t- T_s)]$.

**4.** A method of demodulating a signal in which a carrier is phase modulated with M states, where M is an integer, in which the signal is converted to baseband on two paths in quadrature by multiplication by a local oscillator signal (20) at the carrier frequency, and the baseband signal is digitized by sampling at the clock frequency of the modulating signal,

characterized in that, prior to carrier recovery, the signal clock is recovered by setting the phase of a local clock (34) stabilized at the bit frequency by seeking a minimum of intersymbol interference by sampling the signal before conversion to baseband, measuring the variation in the mean energy of the signal as a function of the sampling phase, and selecting the phase for which the energy is at a maximum.

**5.** Apparatus for demodulating a signal in which a carrier is subjected to M state phase modulation, the apparatus comprising: means including at least one local oscillator (60) for transporting the received signal to an intermediate frequency; means for conversion to baseboard on two paths (I,Q) in quadrature, making use of a local oscillator (20) at a frequency which is adjustable around a nominal value; means (28-32) for sampling and digitally converting the two paths, comprising an adjustable phase clock (32) stabilized on the bit frequency of the incoming clock; and means (38, 40; 56, 57) for recovering the carrier and for coherent demodulation of the two paths, characterized by means (36) for adjusting the phase of the clock to the value which corresponds to the minimum of intersymbol interference, and means for controlling the local oscillator (60), the phase of the clock being adjusted by analyzing the signal prior to recovering the carrier; the said means for adjusting the clock phase comprising means for cal-

EP 0 705 513 B1

culating a non-linear function $F[z(t).z^*(t- T_s)$ where $z = x + jy$ represents the value of the signal on the I and q paths, and $T_s$ is the symbol period, and means for controlling the clock frequency to cause said function to become zero.

6. Apparatus for demodulating a signal in which a carrier is subjected to M-state phase modulation, the apparatus comprising: means including at least one local oscillator (60) for transposing the received signal to an intermediate frequency; means for conversion to baseband on two paths (I, Q) in quadrature, making use of a local oscillator (20) at a frequency which is adjustable around a nominal value; means (28-32) for sampling and digitally converting the two paths, comprising an adjustable phase clock (32) stabilized on the bit frequency of the incoming clock; and means (38, 40; 56, 57) for recovering the carrier and for coherent demodulation of the two paths, characterized by means (36) fir adjusting the phase of the clock to a value which corresponds to the minimum of intersymbol interference and means for controlling the local oscillator (60), the phase of the clock being adjusted by analyzing the signal prior to recovering the carrier; said means being constructed to calculate energy distribution as a function of sampling clock phase and to control the clock frequency so as to obtain a maximum thereof.

7. Apparatus according to claim 6, characterized in that said means seek a maximum of the energy distribution function P by estimating two average powers, one over successive even samples at the symbol frequency $1/T_s$, and the other over the same number of odd samples, by taking the difference of the two estimated powers, and by controlling the sampling clock responsive to the result of the difference.

8. Apparatus according to claim 6, for a 4PSK signal, characterized in that said means are connected to receive digital sample sequences ($I_s$, $Q_s$) at twice the symbol frequency $1/T_s$, and comprise:

   a branch for calculating the average power for even samples and another branch for odd samples, each branch having two elements for raising to the square associated with the paths I and Q and accumulating a plurality of successive samples, plus an adder (46); and
   a substracter (48) forming an output signal that is continuously representative of the difference, and means for performing digital-to-analog conversion and lowpass filtering.

9. Apparatus according to claim 8, characterized in that it further includes means for automatically controlling the gain of an input amplifier (54), comprising an adder (52) for adding the outputs from the adders (46), and a digital-to-analog converter feeding the amplifier gain control input.

FIG.1.

RECUPÉR. D'HORLOGE — 36

C A F — 42

FILTRAGE ET INTERPOLATION | RECUPÉR. DE PORTEUSE — 10

8

FIG.2.

(12GHz) — 11 — $1^{ère}$ FI — 12 — $2^e$ FI (140MHz) — 14 $\approx\approx$ (36MHz) — 16 1/2 NYQUIST

35 — $F[z(t).z^*(t\_Ts)]$

MOYENNE CALCUL DE H RECH. EQUILIBRE — 38

28 — C A N — I

30 — C A N — Q

22 — ⊗

20 CAF — 26

24 — ⊗

18

34 — 32

48 MHz

40 — I Q

FIG.3.

cj — c — 5,75MHz

−c — −cj

y — x

FIG.4.

FIG.5.

HORLOGE 1/Ts

FIG.8.

FIG.9.

FIG.6.

FIG.7.